# EUROPEAN PATENT SPECIFICATION

(11) **EP 0 759 855 B1**
(45) Date of publication and mention of the grant of the patent: **14.05.2003**
(21) Application number: 95921316.6
(22) Date of filing: 19.05.1995
(51) Int. Cl.: B44C 1/165, B32B 3/14, B32B 3/16, G09F 3/02, B65C 9/00, B65C 9/18, B65C 9/22, B65C 11/00

(54) **DECAL ASSEMBLY AND METHOD OF MAKING**
ABZIEHBILD UND VERFAHREN ZU DESSEN HERSTELLUNG
ENSEMBLE POUR DECALCOMANIES ET PROCEDE DE PRODUCTION

(30) Priority: 20.05.1994 US 247003; 12.12.1994 US 354222
(43) Date of publication of application: 05.03.1997
(60) Divisional application: 00117361.6
(73) Proprietor: MINNESOTA MINING AND MANUFACTURING COMPANY, St. Paul, Minnesota 55133-3427 (US)
(72) Inventor: Look, Thomas F., Anoka, Minnesota 55304 (US); Bradshaw, Franklin C., Scottsdale, Arizona 85258 (US); O'Keefe, Robert V., Stillwater, Minnesota 55082 (US)
(74) Representative: Murgitroyd, Ian G.
(86) International application number: PCT/US95/06384
(87) International publication number: WO 95/032098

(56) References cited:
- EP-A- 0 291 178
- US-A- 3 864 855
- US-A- 4 075 049
- US-A- 4 391 853
- US-A- 4 400 419
- US-A- 4 544 590
- US-A- 4 758 952
- US-A- 5 098 759
- US-A- 5 334 431

## Description

### BACKGROUND OF THE INVENTION

### 1. Field of the Invention

The present invention relates to decals and stickers, that is, adhesive coated labels. More specifically, the invention relates to such labels which are retroreflective, and which are provided with variable printed material, and to a method of making same which can be implemented simply and inexpensively to produce individualized labels.

### 2. Related Art

All the states in the United States validate various motor vehicle-related requirements by issuing the vehicle owner a decal to place on the vehicle indicating compliance with the particular requirement. These requirements include, but are not limited to, tax payment, vehicle mechanical inspection, emission inspections, payment for access to parking, and membership in the fire department.

At present, the decals indicating compliance with all of these requirements are made in a central location and typically are issued by one of three means: (1) The decal is applied for and returned to the recipient by mail from a central location. (2) The decal is issued from several governmental offices in the state. (3) The decal is issued by large numbers of privately owned businesses in the state. Information placed on these decals has at most a control number for the state to track the decals. In many states, the control number is essentially useless, because of the difficulty of keeping track of the recipient, where the recipient places the decal with a particular control number, and who can enforce non-compliance. Frequently, the state only has partial control over the decals sent to a particular issuing location, and must trust the issuer to return information matching recipients with decals. Due to the foregoing difficulties, states often find tracking validation decals to be problematic.

Also, fraud can be committed by stealing a decal rather than acquiring it through the proper procedures, by buying and using a counterfeit decal, and by purchasing a decal for one vehicle and using it on another vehicle (referred to as "transferring" the decal). One way to prevent fraud is to print, at the time of issue, vehicle specific information on a decal made from a material that cannot be counterfeited. This is difficult to do under present decal production systems, since the decals are produced at a central location using expensive, automated equipment.

Such expensive automated equipment cannot be cost-justified for non-centralized governmental offices (such as state motor vehicle department offices) and privately-owned locations. Thus, decals issued from many governmental offices or privately-owned locations need a low cost system that can produce the same decals as expensive, automated equipment found at a central location.

### SUMMARY OF THE INVENTION

Based on the foregoing, there exists a need for an adhesive coated decal, and particularly a retroreflective decal, having variable information printed thereon, and an inexpensive and simple method of printing a retroreflective label with variable information and coating it with adhesive. The decal and method of the present invention provide for over-the-counter issuance of a retroreflective decal having variable information printed thereon on an on-demand basis.

In accordance with a first aspect of the present invention, there is provided a decal assembly comprising: a label; a backing sheet, said label being positioned on said backing sheet; an adhesive web covering said label and at least a portion of said backing sheet surrounding the label, said adhesive web being pressure-sensitive and substantially uniformly tacky over its entire surface; and a release liner positioned over said adhesive web and said label.

In accordance with a second aspect of the invention, there is provided a method of making a decal assembly, comprising the steps of:
(a) providing a label having fixed information printed on one face thereof;
(b) printing variable information on the label on the same face as the fixed-information;
(c) assembling the label with the fixed and variable information thereon into a decal assembly comprising the label, a backing sheet on which the label is positioned, a web of pressure-sensitive adhesive of substantially uniform tackiness over its entire surface covering the label and at least a portion of the backing sheet surrounding the label, and a release liner positioned over the adhesive web and the label.

Other aspects and preferred features of the invention are defined in the claims appended hereto.

In use of the invention, individual labels are printed on a master web. In a preferred embodiment, the master web is a retroreflective sheeting. Micro-perforation can be provided at the corners of and between individual labels. The label and the adhesive web over the label define the actual decal. For use, the releasable web is peeled back to reveal the adhesive web, the label, and the backing web. The decal (i.e., the label and the adhesive web covering label) can then be separated from the surrounding adhesive web and the backing web and applied to a surface.

In an alternate embodiment, the master web on which the labels are printed comprises a thermal transfer printable strip laminated over a portion of its width and its full length with retroreflective sheeting. In addition to providing micro-perforation at the corners and between adjacent labels, micro-perforation can also be provided at the inner edge of the retroreflective sheeting to define a line of separation between the two portions of each label. Both portions of label can be printed, for example to provide a decal and a receipt for the decal. Following its separation from the master roll, the individual label is folded along the line of separation, and then inserted into apparatus disclosed in co-pending European Patent Application No. 00117361.6 (divided from the present Application) to make a decal assembly comprising a backing web, the folded label, an adhesive web applied over the folded label and the backing web, and a releasable liner web carrying the adhesive web, and positioned over the folded label. The folded label is placed in the apparatus with the laminated retroreflective portion facing the adhesive web and the unlaminated portion facing the backing web, so that only the retroreflective portion receives the adhesive. Once the adhesive-coated label is separated from the backing web, the laminated and unlaminated portions can be separated from each other along the micro-perforated line of separation.

To prevent fraud in vehicle decal applications, vehicle specific information can be printed at the time of issue on a decal made from a material that cannot be counterfeited. The vehicle specific information can include, but is not limited to the vehicle identification number (VIN); license plate number (which often includes letters as well as numbers, and therefore is hereafter referred to as the "license plate characters"); make, type, and color of the vehicle; name of the vehicle owner; address of the vehicle owner; and a bar code encoding some or all of this information. Stolen, counterfeit, and transferred decals can easily by identified by visual inspection. The issuance of decals can be controlled by computer so that the state has an accurate database of decal use.

Low cost printers are available to print vehicle specific information. For decals placed on a vehicle license plate or on the vehicle body and that need to last less than two years, only a printer is needed. For window decals and decals that need to last more than two years, a secondary operation is needed. Either adhesive or a laminating film must be added after the printing operation. To date, a simple method and equipment for cost-effectively adding the adhesive or laminating film has not been available.

### BRIEF DESCRIPTION OF THE DRAWINGS

The invention is better understood by reading the following Detailed Description of the Preferred Embodiments with reference to the accompanying drawing figures, in which like reference numerals refer to like elements throughout, and in which:
Figure 1 is a diagrammatic view illustrating the steps of a method in accordance with the present invention for printing variable information on a label;
Figure 2 is a simplified side diagrammatic view of apparatus for making a decal assembly using the label of Figure 1;
Figure 3 is a perspective view of a hand brayer being used to make a decal in accordance with the present invention;
Figure 4 is a cross-sectional view of a decal assembly in accordance with the present invention; Figure 5 is a perspective view of the decal assembly of Figure 4 showing the release liner being peeled away;
Figure 6 is a perspective view of the decal assembly of Figure 5 showing the release liner removed and the decal being peeled away from the backing;
Figure 7 is a top plan view of a master laminated along a portion of its width with a second material, for use in an alternate embodiment of the decal assembly in accordance with the present invention;
Figure 8 is a perspective of an alternate embodiment of a decal assembly using the master of Figure 7, folded in half along its length, showing the release liner and the label being separated from the backing sheet;
Figure 9 is a cross-sectional view of the decal assembly of Figure 8;
Figure 10 shows a license plate tax decal assembly;
Figure 11 shows a registration decal assembly;
Figure 12 shows a label for use in a decal assembly providing a house, boat, or snowmobile number;
Figure 13 shows a decal assembly incorporating the label of Figure 12;
Figure 14 shows a decal assembly for a vehicle license plate; and
Figure 15 shows a two-part vehicle registration decal assembly.

### DETAILED DESCRIPTION OF THE PREFERRED EMBODIMENTS

In describing preferred embodiments of the present invention illustrated in the drawings, specific terminology is employed for the sake of clarity. However, the invention is not intended to be limited to the specific terminology so selected, and it is to be understood that each specific element includes all technical equivalents which operate in a similar manner to accomplish a similar purpose.

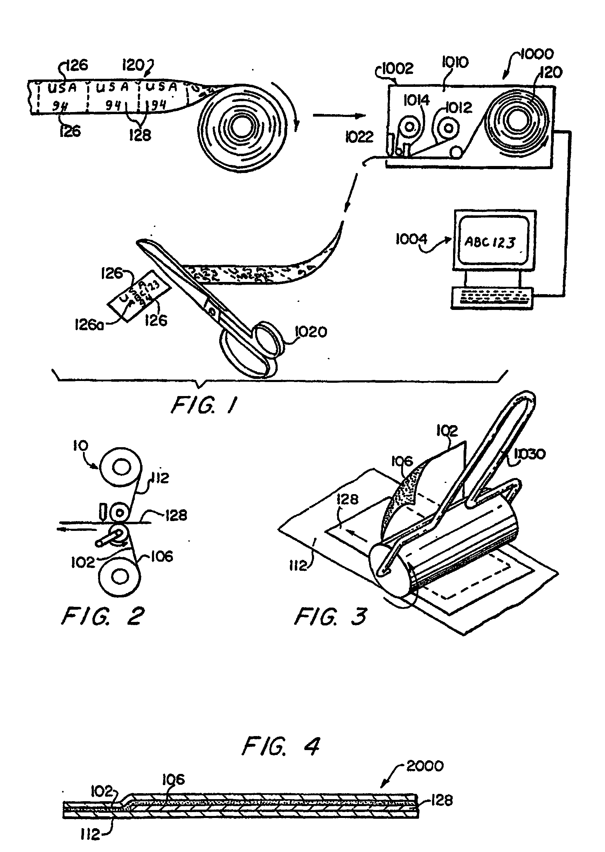

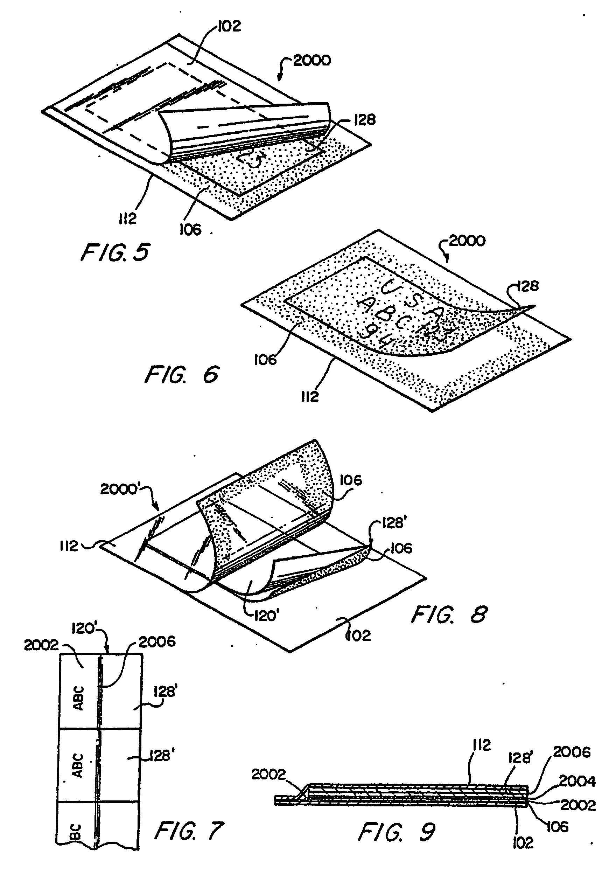

Referring now to Figures 1-3, there is shown simplified apparatus 1000 for making a retroreflective decal assembly 2000 of the type shown in Figures 4-6 or a decal assembly 2000' of the type shown in Figures 8 and 9, these decal assemblies 2000 and 2000' being made in accordance with the method according to the invention. A master 120 for use in the method is chosen based upon the particular application of the decal. For a window decal, master 120 preferably is an adhesive-receptive sheeting such as die cut face adhering verification ("FAV") sheeting wound on a reel or spool as shown in Figure 1. A suitable FAV sheeting, which is difficult to counterfeit, is 3M #2500 FAV sheeting, which is commercially available from 3M. For a decal to be adhered to a vehicle body, master 120 can be, for example, 3M #3750 license plate sheeting or 3M #5330 validation sheeting, both of which are commercially available from 3M.

During manufacture, die cutting (using, for example, a conventional rotary die system) can be used to microperforate the corners for rounding and to microperforate the edges between adjacent decals 128 to facilitate the separation of individual decals 128 from each other. The "weed" (i.e., the scrap around the finished edges of the decals) can be stripped following die cutting to provide RCR (i.e., rounded) corners.

Fixed information 126 can be pre-printed in conjunction with the manufacture of the decals 128, for example in multiple colors using FlexographicJ processing, an inexpensive, high-speed printing process which uses flexible plates on a cylinder for printing graphic information in colored ink, and which is well-known to those of skill in the art. Variable information 126a can be printed easily and inexpensively on an on-demand basis using an on-site computer-controlled thermal transfer printer 1002.

A diagrammatic representation of a thermal transfer printer 1002 and a computer controller 1004 therefor, for printing variable information 126a on the master 120 is shown in Figure 1. Thermal transfer printer 1002 is of conventional design; for example, a "Zebra Stripe" printer (which is commercially available from Zebra Technologies Corporation of Vernon Hills, Illinois) can be used. The master 120 with pre-printed fixed information . 126, and wound on a reel or spool, is placed in the printer housing 1010. Computer controller 1004 is programmed to allow the operator to input the variable information into variable information fields and print out the variable information onto a thermal wax ribbon 1012 using the printer print head 1014. For example, for a vehicle-related decal assembly, the display screen of the computer controller 1004 can prompt the operator at the issuing state motor vehicle department to obtain from the vehicle owner and input into the computer controller 1004 the necessary variable vehicle and owner information. The computer controller 1004 can be linked to a central computer, so that the vehicle and owner information can be centrally accessed by state authorities.

Printer 1002 aligns the labels 128 using timing marks pre-printed on master 120 along with the fixed information 126. The variable information 126a is then transferred from the thermal wax ribbon 1014 onto an individual decal. A suitable thermal transfer ribbon is 3M #VP5130 black thermal transfer ribbon, which is commercially available from 3M. The endmost label 128 is then cut from the roll 120 by a scissors 1020, a cutter 1022 incorporated into the printer housing 1010, or other conventional means, or is separated along the microperforations between the labels 128, and formed into a decal assembly 2000 as shown in Figure 4, using, for example, apparatus 10 in accordance with the present. invention, as shown diagrammatically in Figure 2 or using a hand brayer 1030, as shown in Figure 3.

The decal assembly 2000 comprises a backing web 112, the label 128, an adhesive web 106 applied over the label 128 and the backing web 112, and a releasable liner web 102 carrying the adhesive web 106, and positioned over the label 128; the label 128 and the adhesive web 106 over the label 128 defining the actual decal. Suitable adhesives for adhesive web 106 are 3M #9457, 3M #457MP, 3M #9172, and 3M #932FL, which are commercially available from 3M. As shown in Figure 5, the releasable web 102 is peeled back to reveal the adhesive web 106, the label 128, and the backing web 112. The decal (i.e., label 128 and the adhesive web 106 covering label 128) can then be separated from the surrounding adhesive web 106 and the backing web 112 as shown in Figure 6 and applied to a surface.

As indicated above, where the decal is to be applied to a window, FAV sheeting can be used for the label 128, and where the decal is to be applied to a vehicle body, license plate sheeting or validation sheeting can be used for the label 128. Because of the exposure which body decals receive, it is desirable to provide clear overlaminate sheeting (for example, 3M #7735FL clear overlaminate sheeting, available commercially from 3M) to the printed, non-adhesive face of the decal. This can be accomplished by adhering the overlaminate sheeting to the printed face of the label 128 prior to its assembly to the releasable web, the adhesive web, and the backing web, using the apparatus described below.

An alternate embodiment of the decal assembly 2000' is shown in Figures 8 and 9. For making decal assembly 2000', the master 120', shown in Figure 7, comprises a thermal transfer printable strip laminated over a portion of its width and its full length with retroreflective sheeting 2002; retroreflective sheeting 2002 can be adhered to the master 120' by a web of suitable adhesive 2004 using conventional methods. For vehicle applications, the thermal transfer printable strip can be a polymer strip such as "Kimdura," a polypropylene polyester, or any other material which is resistant to heat and water for use in a vehicle interior.

In addition to providing micro-perforation at the corners and between individual labels 128', micro-perforation can also be provided at the inner edge of the retroreflective sheeting 2002 to define a line of separation 2006 between the two halves of each label 128'. The master 120' is printed as described above with respect to master 120. It is envisioned that the retroreflective portion of the label 128' will be printed for use as a decal, while the unlaminated portion of the label 128' will be printed for use as a receipt accompanying the decal. Following its separation from the master roll, the individual label 128' is folded along the line of separation, and then inserted into the apparatus 10 to make a decal assembly 2000' comprising a backing web 112, the folded label 128', an adhesive web 106 applied over the folded label 128' and the backing web 112, and a releasable liner web 102 carrying the adhesive web 106, and positioned over the folded label 128'. Folded label 128' is placed in the apparatus 10 with the laminated retroreflective portion facing the adhesive web 112 and the unlaminated portion facing the backing web 112. Label 12' can be folded either with the printing facing inwardly or outwardly, depending upon the desired application. Because of the fold, only the laminated portion is covered by adhesive web 106. Once label 128' with adhesive web 106 is separated from backing web 112, the laminated and unlaminated portions can be separated from each other along the micro-perforated line of separation, and the laminated portion covered by adhesive web 106 defines the actual decal.

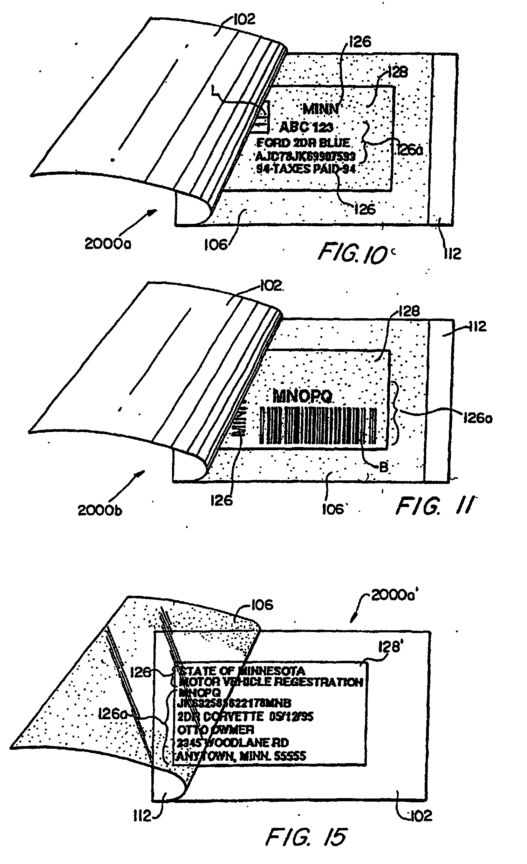

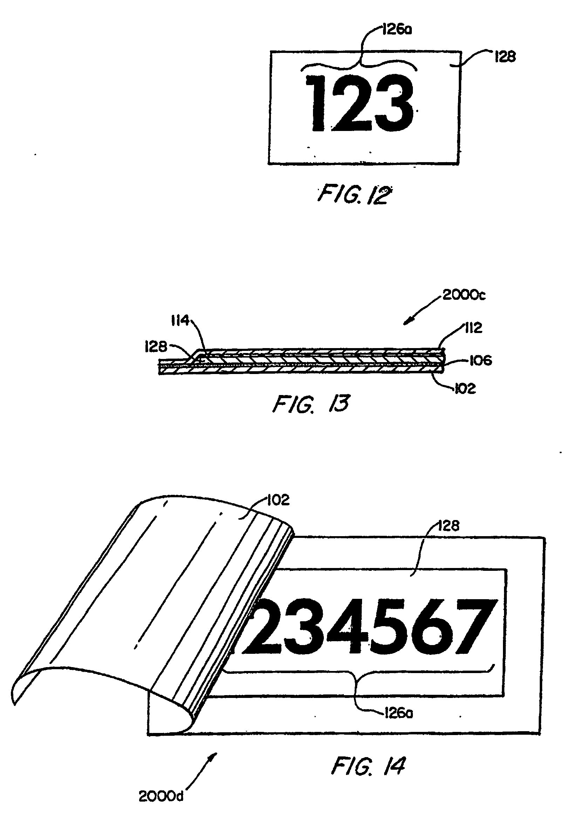

Examples of different types of decals and decal assemblies in accordance with the present invention are shown in Figures 10-15. Figure 10 shows a license plate tax decal assembly 2000a similar in type to decal assembly 2000 shown in Figures 4-6. For decal assembly 2000a, the fixed information 126 printed on the master 120 comprises, for example, the state (in this case, Minnesota) and a legend identifying the decal (in this case, "94-TAXES PAID-94"); other information, such as some type of logo (indicated in Figure 10 by reference letter L) can also be included. The variable information 126a added to the master 120 at the Motor Vehicle Department Office comprises, for example, the license plate number (shown in Figure 35 as "ABC 123"); information identifying the vehicle, for example by make, style and color (shown in Figure 10 as "FORD-2DR-BLUE"); and the vehicle identification number ("A5678JKG9907543" in Figure 10). In this case, the master 120 preferably is retroreflective FAV sheeting, although other types of sheeting can also be used.

Figure 11 shows a registration decal assembly 2000b also similar in type to decal assembly 2000 shown in Figures 4-6. For decal assembly 2000b, the fixed information 126 printed on the master 120 comprises the state (again, Minnesota). The variable information 126a added to the master at the Motor Vehicle Department Office comprises, for example, the license plate characters (shown in Figure 36 as "MNOPQR") and a bar code representing the license plate characters (indicated in Figure 11 by reference letter B). Police officers equipped with a bar code reader can readily read the bar code; through conventional technology, information about the vehicle can then be obtained through a computer linked to the bar code reader. In this case also, the master 120 preferably is retroreflective sheeting, although again, other types of sheeting can also be used.

This type of decal assembly can be used for other applications, such as numbers for houses, boats, snowmobiles, etc. and on vehicle license plates. As shown in Figures 12 and 13, in a decal assembly 2000c providing a house, boat, or snowmobile number, the fixed information is omitted. The number (shown in Figure 12 as "123") is printed as the variable information 126A, and is then laminated prior to assembly using clear overlaminate sheeting 114, as described above with respect to a vehicle body decal. The number can be printed normally or in reverse (negative).

As shown in Figure 14, in a decal assembly 2000d for a vehicle license plate, for example of the type used in the United Kingdom, the variable information 126a comprises the license characters (shown in Figure 14 as "1234567") and the adhesive web 106 is applied to the printed side of the label 128. For assembly into a license plate, the release web is removed from the decal assembly, the label is removed from the backing web, and then the label is applied to an acrylic, polyester, or similar clear plastic plate which can be fastened to the vehicle.

Figure 15 shows a two-part vehicle registration decal assembly 2000a' similar in type to decal assembly 2000' shown in Figures 8 and 9. For decal assembly 2000a', the portion facing releasable web 102 comprises the decal portion to be adhered to a vehicle window, and can be printed as described above with respect to Figure 11. The portion facing the backing web 112 comprises the receipt portion. For decal assembly 2000a', the fixed information 126 printed on the receipt portion of the master 120 comprises an identifying legend (in this case, "STATE OF MINNESOTA MOTOR VEHICLE REGISTRATION"). The variable information 126a added to the master at the Motor Vehicle Department Office comprises, for example, the license plate characters (shown in Figure 15 as "MNOPQR"); the vehicle identification number (shown in Figure 15 as "JK632585622178MNB"); information identifying the vehicle, for example by make and style (shown in Figure 15 as "2 DR CORVETTE"); the date of registration (shown in Figure 15 as "05/12/95"); and the name and address of the vehicle owner.

## Claims

1. A decal assembly comprising:
a label;
a backing sheet, said label being positioned on said backing sheet;
an adhesive web covering said label and at least a portion of said backing sheet surrounding the label, said adhesive web being pressure-sensitive and substantially uniformly tacky over its entire surface; and
a release liner positioned over said adhesive web and said label.

2. The decal assembly of claim 1, wherein said release liner is substantially co-extensive with said adhesive web.

3. The decal assembly of claim 1, further comprising a clear laminate sheet adhered to said label and interposed between said label and said backing sheet.

4. The decal assembly of claim 1, wherein said label is made from retroreflective sheeting.

5. The decal assembly of claim 1, wherein said label has fixed and variable information printed on one of said front and back faces thereof.

6. The decal assembly of claim 1, wherein said variable information includes the vehicle license plate characters.

7. The decal assembly of claim 1, wherein said variable information includes the vehicle identification number.

8. A decal assembly comprising:
a backing sheet having an inner face, an outer face, a pair of opposed side edges, and a pair of opposed end edges, said inner face of said backing sheet having an affinity for adhesive;
a label positioned on said inner face of said backing sheet, said label having a front face, a back face, a pair of opposed side edges, and a pair of opposed end edges, said label having a width and a length smaller than the distance between said side edges of said backing sheet, said back face of said label facing said inner face of said backing sheet and said side and end edges of said label being positioned inwardly of said side and end edges of said backing sheet;
a release liner sheet positioned over said label and said backing sheet, said release liner sheet having a front face, a back face, a pair of opposed side edges, and a pair of opposed end edges, said release liner sheet having a width greater than said width of said label and smaller than said width of said backing sheet, said inner face of said release liner sheet facing said inner face of said backing sheet and said front face of said label, said side edges of said release liner sheet being positioned outwardly of said side edges of said label, and said end edges of said release liner sheet being positioned outwardly of said end edges of label and substantially in registration with said end edges of said backing sheet; and
a web of pressure sensitive adhesive carried by said inner face of said release liner sheet and interposed between said inner face of said release liner sheet and said label, said web having substantially the same dimensions as said release liner sheet, said web being pressure-sensitive and substantially uniformly tacky over its entire surface, and said release liner sheet having release characteristics such that said adhesive web is loosely adhered to said inner face of said release liner sheet.

9. The decal assembly of claim 8, further comprising a clear laminate sheet adhered to said label and interposed between said label and said backing sheet.

10. The decal assembly of claim 8, wherein said label is made from retroreflective sheeting.

11. The decal assembly of claim 8, wherein said label has fixed and variable information on one of said front and back faces thereof.

12. The decal assembly of claim 8, wherein said variable information includes the vehicle license plate characters.

13. The decal assembly of claim 8, wherein said variable information includes the vehicle identification number.

14. The decal assembly of claim 8, said adhesive being a non-aggressive adhesive with respect to said backing sheet.

15. A motor vehicle decal assembly comprising:
a backing sheet having an inner face, an outer face, a pair of opposed side edges, and a pair of opposed end edges, said inner face of said backing sheet having an affinity for adhesive;
a label positioned on said inner face of said backing sheet, said label having a front face, a back face, a pair of opposed side edges, and a pair of opposed end edges, said label having a width and a length smaller than the distance between said side edges of said backing sheet, said back face of said label facing said inner face of said backing sheet and said side and end edges of said label being positioned inwardly of said side and end edges of said backing sheet, said label having variable information printed on one of said front and back faces thereof identifying a vehicle for which said label is being issued;
a release liner sheet positioned over said label and said backing sheet, said release liner sheet having a front face, a back face, a pair of opposed side edges, and a pair of opposed end edges, said release liner sheet having a width greater that said width of said label and smaller than said width of said backing sheet, said inner face of said release liner sheet facing said inner face of said backing sheet and said front face of said label, said side edges of said release liner sheet being positioned outwardly of said side edges of said label, and said end edges of said release liner sheet being positioned outwardly of said end edges of label and substantially in registration with said end edges of said backing sheet; and
a web of pressure sensitive adhesive carried by said inner face of said release liner sheet and interposed between said inner face of said release liner sheet and said label, said web having substantially the same dimensions as said release liner sheet, said adhesive being a non-aggressive, pressure-sensitive adhesive which is substantially uniformly tacky over its entire surface, and said release liner sheet having release characteristics such that said adhesive web is non-aggressive adhesive loosely adhered to said inner face of said release liner sheet.

16. The decal assembly of claim 15, further comprising a clear laminate sheet adhered to said label and interposed between said label and said backing sheet.

17. The decal assembly of claim 15, wherein said variable information includes the vehicle license plate characters.

18. The decal assembly of claim 15, wherein said variable information includes the vehicle identification number.

19. A method of making a decal assembly, comprising the steps of:
(a) providing a label having fixed information printed on one face thereof;
(b) printing variable information on the label on the same face as the fixed information;
(c) assembling the label with the fixed and variable information thereon into a decal assembly comprising the label, a backing sheet on which the label is positioned, a web of pressure-sensitive adhesive of substantially uniform tackiness over its entire surface covering the label and at least a portion of the backing sheet surrounding the label, and a release liner positioned over the adhesive web and the label.

20. A method of making a motor vehicle decal assembly using a label having fixed information printed thereon, comprising the steps of:
(a) obtaining from a customer variable information identifying a motor vehicle for which the label is being issued to the customer;
(b) entering into a computer the information obtained from the customer;
(c) printing the variable information on the label using a printer controlled by the computer; and
(d) assembling the label with the fixed and variable information thereon into a decal assembly comprising the label, a backing sheet on which the label is positioned, a web of pressure-sensitive adhesive of substantially uniform tackiness over its entire surface covering the label and at least a portion of the backing sheet surrounding the label, and a release liner positioned over the adhesive web and the label.

21. The method of claim 19, further comprising the step of adhering a laminate sheet to the face of the label on which the fixed and variable information is printed, between said steps (b) and (c).

22. A method of making a motor vehicle decal assembly using a label having fixed information printed thereon, comprising the steps of:
(a) obtaining from a customer variable information identifying a motor vehicle for which the label is being issued to the customer;
(b) entering into a computer the information obtained from the customer;
(c) printing the variable information on the label using a printer controlled by the computer; and
(d) assembling the label with the fixed and variable information thereon into a decal assembly comprising the label, a backing sheet on which the label is positioned, an adhesive web covering the label and at least a portion of the backing sheet surrounding the label, and a release liner positioned over the adhesive web and the label.

23. The method of claim 22, further comprising the step of adhering a laminate sheet to the face of the label on which the fixed and variable information is printed, between said steps (c) and (d).

24. The decal assembly of claim 1, wherein said label comprises a strip having a pair of opposed side edges and a fold line intermediate said side edges dividing said label into first and second portions, said strip being folded at said fold line and said first facing said adhesive web and said second portion facing said backing sheet.

25. The decal assembly of claim 24, wherein said label further comprises retroreflective sheeting adhered to said first portion and facing said adhesive web.

26. The decal assembly of claim 25, wherein said retroreflective sheeting is substantially coextensive with said first portion.

27. The decal assembly of claim 25, wherein said strip is a thermal transfer printable strip.

28. The decal assembly of claim 27, wherein said strip is made of a material which is resistant to heat and water.

29. The decal assembly of claim 27, wherein said strip is made of a material chosen from the group consisting of a polymer and a polypropylene polyester.

30. The decal assembly of claim 25, wherein said fold line is perforated to define a line of separation between said first and second portions.

31. The decal assembly of claim 25, wherein said retroreflective sheeting is printed for use as a decal and said second portion is printed for use as a receipt accompanying said decal.

## Patentansprüche

1. Eine Abziehbildanordnung, bestehend aus:
einem Etikett;
einer Rückenbeschichtung, wobei das Etikett auf der Rückenbeschichtung positioniert ist;
einem Haftgewebe, das das Etikett und zumindest einen Abschnitt der das Etikett umgebenden Rückenbeschichtung bedeckt, wobei das Haftgewebe selbstklebend und über seine gesamte Oberfläche im Wesentlichen gleichmäßig klebrig ist; und
einer Abdeckschicht, die über dem Haftgewebe und dem Etikett positioniert ist.

2. Abziehbildanordnung gemäß Anspruch 1, wobei die Abdeckschicht im Wesentlichen gemeinsam mit dem Haftgewebe gestreckt werden kann.

3. Abziehbildanordnung gemäß Anspruch 1, weiterhin bestehend aus einem klaren Schichtstoffblatt, das an dem Etikett anhaftet und zwischen dem Etikett und der Rückenbeschichtung liegt.

4. Abziehbildanordnung gemäß Anspruch 1, wobei das Etikett aus rückstrahlender Folie hergestellt ist.

5. Abziehbildanordnung gemäß Anspruch 1, wobei festgelegte und variable Informationen auf entweder die Vorder- oder Rückfläche des Etiketts gedruckt sind.

6. Abziehbildanordnung gemäß Anspruch 1, wobei die variablen Informationen die Buchstaben und/oder Ziffern des Fahrzeugnummernschilds umfassen.

7. Abziehbildanordnung gemäß Anspruch 1, wobei die variablen Informationen die Fahrzeugidentifizierungsnummer umfassen.

8. Eine Abziehbildanordnung, bestehend aus:
einer Rückenbeschichtung mit einer Innenfläche, einer Außenfläche, einem Paar gegenüberstehender Seitenkanten und einem Paar gegenüberstehender Endkanten, wobei die Innenfläche der Rückenbeschichtung eine Klebstoffaffinität aufweist;
einem Etikett, das auf der Innenfläche der Rückenbeschichtung positioniert ist, wobei das Etikett eine Vorderfläche, eine Rückfläche, ein Paar gegenüberstehender Seitenkanten und ein Paar gegenüberstehender Endkanten aufweist, wobei das Etikett eine Breite und eine Länge aufweist, die kleiner als der Abstand zwischen den Seitenkanten der Rückenbeschichtung sind, wobei die Rückfläche des Etiketts der Innenfläche der Rückenbeschichtung zugewandt ist und die Seiten- und Endkanten des Etiketts von den Seiten- und Endkanten der Rückenbeschichtung nach innen positioniert sind;
einem Abdeckschichtsblatt, das über dem Etikett und der Rückenbeschichtung positioniert ist, wobei das Abdeckschichtsblatt eine Vorderfläche, eine Rückfläche, ein Paar gegenüberstehender Seitenkanten und ein Paar gegenüberstehender Endkanten aufweist, wobei das Abdeckschichtsblatt eine Breite aufweist, die größer als die Breite des Etiketts und kleiner als die Breite der Rückenbeschichtung ist, wobei die Innenfläche des Abdeckschichtsblatts der Innenfläche der Rückenbeschichtung und der Vorderfläche des Etiketts zugewandt ist, wobei die Seitenkanten des Abdeckschichtsblatts von den Seitenkanten des Etiketts nach außen positioniert sind, und wobei die Endkanten des Abdeckschichtsblatts von den Endkanten des Etiketts nach außen und im Wesentlichen in Lagegenauigkeit mit den Endkanten der Rückenbeschichtung positioniert sind; und
einem Haftklebergewebe, das von der Innenfläche des Abdeckschichtsblatts getragen wird und zwischen der Innenfläche des Abdeckschichtsblatts und dem Etikett liegt, wobei das Gewebe im Wesentlichen die gleichen Dimensionen wie das Abdeckschichtsblatt aufweist, wobei das Gewebe selbstklebend und über seine gesamte Oberfläche im Wesentlichen gleichmäßig klebrig ist, und wobei das Abdeckschichtsblatt derartige Abdeckmerkmale aufweist, dass das Haftgewebe leicht an der innenfläche des Abdeckschichtsblatts anhaftet.

9. Abziehbildanordnung gemäß Anspruch 8, weiterhin bestehend aus einem klaren Schichtstoffblatt, das an dem Etikett anhaftet und zwischen dem Etikett und der Rückenbeschichtung liegt.

10. Abziehbildanordnung gemäß Anspruch 8, wobei das Etikett aus rückstrahlender Folie hergestellt ist.

11. Abziehbildanordnung gemäß Anspruch 8, wobei festgelegte und variable Informationen auf entweder die Vorder- oder Rückfläche des Etiketts gedruckt sind.

12. Abziehbildanordnung gemäß Anspruch 8, wobei die variablen Informationen die Buchstaben und/oder Ziffern des Fahrzeugnummernschilds umfassen.

13. Abziehbildanordnung gemäß Anspruch 8, wobei die variablen Informationen die Fahrzeugidentifizierungsnummer umfassen.

14. Abziehbildanordnung gemäß Anspruch 8, wobei der Klebstoff bezüglich der Rückenbeschichtung ein nichtaggressiver Klebstoff ist.

15. Eine Kraftfahrzeugabziehbildanordnung, bestehend aus:
einer Rückenbeschichtung mit einer Innenfläche, einer Außenfläche, einem Paar gegenüberstehender Seitenkanten und einem Paar gegenüberstehender Endkanten, wobei die Innenfläche der Rückenbeschichtung eine Klebstoffaffinität aufweist;
einem Etikett, das auf der Innenfläche der Rückenbeschichtung positioniert ist, wobei das Etikett eine Vorderfläche, eine Rückfläche, ein Paar gegenüberstehender Seitenkanten und ein Paar gegenüberstehender Endkanten aufweist, wobei das Etikett eine Breite und eine Länge aufweist, die kleiner als der Abstand zwischen den Seitenkanten der Rückenbeschichtung sind, wobei die Rückfläche des Etiketts der innenfläche der Rückenbeschichtung zugewandt ist und die Seiten- und Endkanten des Etiketts von den Seiten- und Endkanten der Rückenbeschichtung nach innen positioniert sind, wobei variable Informationen; welche ein Fahrzeug identifizieren, auf das das Etikett ausgestellt wird, auf entweder die Vorder- oder Rückfläche des Etiketts gedruckt sind;
einem Abdeckschichtsblatt, das über dem Etikett und der Rückenbeschichtung positioniert ist, wobei das Abdeckschichtsblatt eine Vorderfläche, eine Rückfläche, ein Paar gegenüberstehender Seitenkanten und ein Paar gegenüberstehender Endkanten aufweist, wobei das Abdeckschichtsblatt eine Breite aufweist, die größer als die Breite des Etiketts und kleiner als die Breite der Rückenbeschichtung ist, wobei die Innenfläche des Abdeckschichtsblatts der Innenfläche der Rückenbeschichtung und der Vorderfläche des Etiketts zugewandt ist, wobei die Seitenkanten des Abdeckschichtsblatts von den Seitenkanten des Etiketts nach außen positioniert sind, und wobei die Endkanten des Abdeckschichtsblatts von den Endkanten des Etiketts nach außen und im Wesentlichen in Lagegenauigkeit mit den Endkanten der Rückenbeschichtung positioniert sind; und
einem Haftklebergewebe, das von der Innenfläche des Abdeckschichtsblatts getragen wird und zwischen der Innenfläche des Abdeckschichtsblatts und dem Etikett liegt, wobei das Gewebe im Wesentlichen die gleichen Dimensionen wie das Abdeckschichtsblatt aufweist, wobei der Klebstoff ein nichtaggressiver Haftkleber ist, der im Wesentlichen über seine gesamte Oberfläche gleichmäßig klebrig ist, und wobei das Abdeckschichtsblatt derartige Abdeckmerkmale aufweist, dass das Haftgewebe ein nichtaggressiver Klebstoff ist, der leicht an der Innenfläche des Abdeckschichtsblatts anhaftet.

16. Abziehbildanordnung gemäß Anspruch 15, weiterhin bestehend aus einem klaren Schichtstoffblatt, das an dem Etikett anhaftet und zwischen dem Etikett und der Rückenbeschichtung liegt.

17. Abziehbildanordnung gemäß Anspruch 15, wobei die variablen informationen die Buchstaben und/oder Ziffern des Fahrzeugnummernschilds umfassen.

18. Abziehbildanordnung gemäß Anspruch 15, wobei die variablen Informationen die Fahrzeugidentifizierungsnummer umfassen.

19. Ein Verfahren zur Herstellung einer Abziehbildanordnung, bestehend aus folgenden Schritten:
(a) Bereitstellen eines Etiketts mit festgelegten auf eine Fläche davon gedruckten Informationen;
(b) Drucken von variablen Informationen auf das Etikett auf die gleiche Fläche wie die festgelegten Informationen;
(c) Anordnen des Etiketts mit den festgelegten und variablen Informationen darauf in einer Abziehbildanordnung, bestehend aus dem Etikett, einer Rückenbeschichtung, auf der das Etikett positioniert ist, einem Haftklebergewebe, das im Wesentlichen über seine gesamte Oberfläche gleichmäßig klebrig ist und das Etikett und zumindest einen Abschnitt der das Etikett umgebenden Rückenbeschichtung bedeckt, und einer Abdeckschicht, die über dem Haftgewebe und dem Etikett positioniert ist.

20. Ein Verfahren zur Herstellung einer Kraftfahrzeugabziehbildanordnung unter Verwendung eines Etiketts, auf das festgelegte Informationen gedruckt sind, bestehend aus folgenden Schritten:
(a) Erhalten variabler Informationen von einem Kunden, die ein Kraftfahrzeug identifizieren, auf das das Etikett dem Kunden ausgestellt wird;
(b) Eingeben der von dem Kunden erhaltenen Informationen in einen Computer;
(c) Drucken der variablen Informationen auf das Etikett unter Verwendung eines von dem Computer gesteuerten Druckers; und
(d) Anordnen des Etiketts mit den festgelegten und variablen Informationen darauf in einer Abziehbildanordnung, bestehend aus dem Etikett, einer Rückenbeschichtung, auf der das Etikett positioniert ist, einem Haftklebergewebe, das im Wesentlichen über seine gesamte Oberfläche gleichmäßig klebrig ist und das Etikett und zumindest einen Abschnitt der das Etikett umgebenden Rückenbeschichtung bedeckt, und einer Abdeckschicht, die über dem Haftgewebe und dem Etikett positioniert ist.

21. Verfahren gemäß Anspruch 19, weiterhin bestehend aus dem Schritt des Haftens eines Schichtstoffblatts an die Fläche des Etiketts, auf welche die festgelegten und variablen Informationen gedruckt sind, zwischen Schritt (b) und (c).

22. Verfahren zur Herstellung einer Kraftfahrzeugabziehbildanordnung unter Verwendung eines Etiketts, auf das festgelegte Informationen gedruckt sind, bestehend aus folgenden Schritten:
(a) Erhalten variabler Informationen von einem Kunden, die ein Kraftfahrzeug identifizieren, auf das das Etikett dem Kunden ausgestellt wird;
(b) Eingeben der von dem Kunden erhaltenen Informationen in einen Computer;
(c) Drucken der variablen Informationen auf das Etikett unter Verwendung eines von dem Computer gesteuerten Druckers; und
(d) Anordnen des Etiketts mit den festgelegten und variablen Informationen darauf in einer Abziehbildanordnung, bestehend aus dem Etikett, einer Rückenbeschichtung, auf der das Etikett positioniert ist, einem Haftklebergewebe, das das Etikett und zumindest einen Abschnitt der das Etikett umgebenden Rückenbeschichtung bedeckt, und einer Abdeckschicht, die über dem Haftgewebe und dem Etikett positioniert ist.

23. Verfahren gemäß Anspruch 22, weiterhin bestehend aus dem Schritt des Haftens eines Schichtstoffblatts an die Fläche des Etiketts, auf welche die festgelegten und variablen Informationen gedruckt sind, zwischen Schritt (c) und (d).

24. Abziehbildanordnung gemäß Anspruch 1, wobei das Etikett aus einem Streifen besteht, der ein Paar gegenüberstehender Seitenkanten und eine Faltlinie zwischen den Seitenkanten aufweist, die das Etikett in einen ersten und zweiten Abschnitt teilt, wobei der Streifen an der Faltlinie gefalten ist und der erste Abschnitt dem Haftgewebe zugewandt ist und der zweite Abschnitt der Rückenbeschichtung zugewandt ist.

25. Abziehbildanordnung gemäß Anspruch 24, wobei das Etikett weiterhin aus rückstrahlender Folie, die an dem ersten Abschnitt anhaftet und dem Haftgewebe zugewandt ist, besteht.

26. Abziehbildanordnung gemäß Anspruch 25, wobei die rückstrahlende Folie im Wesentlichen gemeinsam mit dem ersten Abschnitt gestreckt werden kann.

27. Abziehbildanordnung gemäß Anspruch 25, wobei der Streifen ein durch Thermotransfer druckbarer Streifen ist.

28. Abziehbildanordnung gemäß Anspruch 27, wobei der Streifen aus einem hitze- und wasserbeständigen Material hergestellt ist.

29. Abziehbildanordnung gemäß Anspruch 27, wobei der Streifen aus einem Material hergestellt ist, das aus der Gruppe ausgewählt ist, die aus einem Polymer und einem Polypropylenpolyester besteht.

30. Abziehbildanordnung gemäß Anspruch 25, wobei die Faltlinie perforiert ist, um eine Trennlinie zwischen dem ersten und zweiten Abschnitt zu definieren.

31. Abziehbildanordnung gemäß Anspruch 25, wobei die rückstrahlende Folie zur Verwendung als Abziehbild bedruckt wird und der zweite Abschnitt zur Verwendung als dem Abziehbild beiliegende Empfangsbestätigung bedruckt wird.

## Revendications

1. Un ensemble pour décalcomanie comprenant :
une étiquette ;
une feuille support, ladite étiquette étant positionnée sur ladite feuille support ;
une bande adhésive recouvrant ladite étiquette et au moins une portion de ladite feuille support entourant l'étiquette, ladite bande adhésive étant sensible à la pression et collante de façon substantiellement uniforme sur toute sa surface ; et
une couverture à décoller positionnée par-dessus ladite bande adhésive et ladite étiquette.

2. L'ensemble pour décalcomanie de la revendication 1, dans lequel ladite couverture à décoller est substantiellement de même étendue que ladite bande adhésive.

3. L'ensemble pour décalcomanie de la revendication 1, comprenant de plus une feuille laminée claire qui adhère à ladite étiquette et qui est interposée entre ladite étiquette et ladite feuille support.

4. L'ensemble pour décalcomanie de la revendication 1, dans lequel ladite étiquette est réalisée à partir de feuille rétroréfléchissante.

5. L'ensemble pour décalcomanie de la revendication 1, dans lequel ladite étiquette a des informations fixes et variables imprimées sur l'une desdites faces avant et arrière de celle-ci.

6. L'ensemble pour décalcomanie de la revendication 1, dans lequel lesdites informations variables incluent les caractères de plaque d'immatriculation de véhicule.

7. L'ensemble pour décalcomanie de la revendication 1, dans lequel lesdites informations variables incluent le numéro d'identification de véhicule.

8. Un ensemble pour décalcomanie comprenant :
une feuille support ayant une face interne, une face externe, une paire de bords latéraux opposés et une paire de bords d'extrémité opposés, ladite face interne de ladite feuille support ayant une affinité pour l'adhésif ;
une étiquette positionnée sur ladite face interne de ladite feuille support, ladite étiquette ayant une face avant, une face arrière, une paire de bords latéraux opposés et une paire de bords d'extrémité opposés, ladite étiquette ayant une largeur et une longueur plus petites que la distance entre lesdits bords latéraux de ladite feuille support, ladite face arrière de ladite étiquette faisant face à ladite face interne de ladite feuille support et lesdits bords latéraux et d'extrémité de ladite étiquette étant positionnés à l'intérieur desdits bords latéraux et d'extrémité de ladite feuille support ;
une feuille de couverture à décoller positionnée par-dessus ladite étiquette et ladite feuille support, ladite feuille de couverture à décoller ayant une face avant, une face arrière, une paire de bords latéraux opposés et une paire de bords d'extrémité opposés, ladite feuille de couverture à décoller ayant une largeur plus grande que ladite largeur de ladite étiquette et plus petite que ladite largeur de ladite feuille support, ladite face interne de ladite feuille de couverture à décoller faisant face à ladite face interne de ladite feuille support et ladite face avant de ladite étiquette, lesdits bords latéraux de ladite feuille de couverture à décoller étant positionnés à l'extérieur desdits bords latéraux de ladite étiquette, et lesdits bords d'extrémité de ladite feuille de couverture à décoller étant positionnés à l'extérieur desdits bords d'extrémité de l'étiquette et de façon à coïncider substantiellement avec lesdits bords d'extrémité de ladite feuille support ; et
une bande d'adhésif sensible à la pression portée par ladite face interne de ladite feuille de couverture à décoller et interposée entre ladite face interne de ladite feuille de couverture à décoller et ladite étiquette, ladite bande ayant substantiellement les mêmes dimensions que ladite feuille de couverture à décoller, ladite bande étant sensible à la pression et collante de façon substantiellement uniforme sur toute sa surface, et ladite feuille de couverture à décoller ayant des caractéristiques de décollage telles que ladite bande adhésive adhère faiblement à ladite face interne de ladite feuille de couverture à décoller.

9. L'ensemble pour décalcomanie de la revendication 8, comprenant de plus une feuille laminée claire qui adhère à ladite étiquette et qui est interposée entre ladite étiquette et ladite feuille support.

10. L'ensemble pour décalcomanie de la revendication 8, dans lequel ladite étiquette est réalisée à partir de feuille rétroréfiéchissante.

11. L'ensemble pour décalcomanie-de la revendication 8, dans lequel ladite étiquette a des informations fixes et variables sur l'une desdites faces avant et arrière de celle-ci.

12. L'ensemble pour décalcomanie de la revendication 8, dans lequel lesdites informations variables incluent les caractères de plaque d'immatriculation de véhicule.

13. L'ensemble pour décalcomanie de la revendication 8, dans lequel lesdites informations variables incluent le numéro d'identification de véhicule.

14. L'ensemble pour décalcomanie de la revendication 8, ledit adhésif étant un adhésif non agressif envers ladite feuille support.

15. Un ensemble pour décalcomanie pour véhicule motorisé comprenant :
une feuille support ayant une face interne, une face externe, une paire de bords latéraux opposés et une paire de bords d'extrémité opposés, ladite face interne de ladite feuille support ayant une affinité pour l'adhésif ;
une étiquette positionnée sur ladite face interne de ladite feuille support, ladite étiquette ayant une face avant, une face arrière, une paire de bords latéraux opposés et une paire de bords d'extrémité opposés, ladite étiquette ayant une largeur et une longueur plus petites que la distance entre lesdits bords latéraux de ladite feuille support, ladite face arrière de ladite étiquette faisant face à ladite face interne de ladite feuille support et lesdits bords latéraux et d'extrémité de ladite étiquette étant positionnés à l'intérieur desdits bords latéraux et d'extrémité de ladite feuille support, ladite étiquette ayant des informations variables imprimées sur l'une desdites faces avant et arrière de celle-ci identifiant un véhicule pour lequel ladite étiquette est délivrée ;
une feuille de couverture à décoller positionnée par-dessus ladite étiquette et ladite feuille support, ladite feuille de couverture à décoller ayant une face avant, une face arrière, une paire de bords latéraux opposés et une paire de bords d'extrémité opposés, ladite feuille de couverture à décoller ayant une largeur plus grande que ladite largeur de ladite étiquette et plus petite que ladite largeur de ladite feuille support, ladite face interne de ladite feuille de couverture à décoller faisant face à ladite face interne de ladite feuille support et ladite face avant de ladite étiquette, lesdits bords latéraux de ladite feuille de couverture à décoller étant positionnés à l'extérieur desdits bords latéraux de ladite étiquette, et lesdits bords d'extrémité de ladite feuille de couverture à décoller étant positionnés à l'extérieur desdits bords d'extrémité de l'étiquette et de façon à coïncider substantiellement avec lesdits bords d'extrémité de ladite feuille support ; et
une bande d'adhésif sensible à la pression portée par ladite face interne de ladite feuille de couverture à décoller et interposée entre ladite face interne de ladite feuille de couverture à décoller et ladite étiquette, ladite bande ayant substantiellement les mêmes dimensions que ladite feuille de couverture à décoller, ledit adhésif étant un adhésif non agressif sensible à la pression qui est collant de façon substantiellement uniforme sur toute sa surface, et ladite feuille de couverture à décoller ayant des caractéristiques de décollage telles que ladite bande adhésive soit de l'adhésif non agressif qui adhère faiblement à ladite face interne de ladite feuille de couverture à décoller.

16. L'ensemble pour décalcomanie de la revendication 15, comprenant de plus une feuille laminée claire qui adhère à ladite étiquette et qui est interposée entre ladite étiquette et ladite feuille support.

17. L'ensemble pour décalcomanie de la revendication 15, dans lequel lesdites informations variables incluent les caractères de plaque d'immatriculation de véhicule.

18. L'ensemble pour décalcomanie de la revendication 15, dans lequel lesdites informations variables incluent le numéro d'identification de véhicule.

19. Un procédé de fabrication d'un ensemble pour décalcomanie, comprenant les étapes consistant :
(a) à fournir une étiquette ayant des informations fixes imprimées sur une face de celle-ci ;
(b) à imprimer des informations variables sur l'étiquette sur la même face que les informations fixes ;
(c) à assembler l'étiquette avec les informations fixes et variables sur celle-ci pour former un ensemble pour décalcomanie comprenant l'étiquette, une feuille support sur laquelle l'étiquette est positionnée, une bande d'adhésif sensible à la pression de pégosité substantiellement uniforme sur toute sa surface recouvrant l'étiquette et au moins une portion de la feuille support entourant l'étiquette, et une couverture à décoller positionnée par-dessus la bande adhésive et l'étiquette.

20. Un procédé de fabrication d'un ensemble pour décalcomanie pour véhicule motorisé utilisant une étiquette ayant des informations fixes imprimées sur celle-ci, comprenant les étapes consistant :
(a) à obtenir auprès d'un client des informations variables identifiant un véhicule motorisé pour lequel l'étiquette est délivrée au client ;
(b) à saisir les informations obtenues auprès du client dans un ordinateur ;
(c) à imprimer les informations variables sur l'étiquette en utilisant une imprimante commandée par l'ordinateur ; et
(d) à assembler l'étiquette avec les informations fixes et variables sur celle-ci pour former un ensemble pour décalcomanie comprenant l'étiquette, une feuille support sur laquelle l'étiquette est positionnée, une bande d'adhésif sensible à la pression de pégosité substantiellement uniforme sur toute sa surface recouvrant l'étiquette et au moins une portion de la feuille support entourant l'étiquette, et une couverture à décoller positionnée par-dessus la bande adhésive et l'étiquette.

21. Le procédé de la revendication 19, comprenant de plus l'étape consistant à faire adhérer une feuille laminée sur la face de l'étiquette sur laquelle les informations fixes et variables sont imprimées, entre lesdites étapes (b) et (c).

22. Un procédé de fabrication d'un ensemble pour décalcomanie pour véhicule motorisé utilisant une étiquette ayant des informations fixes imprimées sur celle-ci, comprenant les étapes consistant :
(a) à obtenir auprès d'un client des informations variables identifiant un véhicule motorisé pour lequel l'étiquette est délivrée au client ;
(b) à saisir les informations obtenues auprès du client dans un ordinateur ;
(c) à imprimer les informations variables sur l'étiquette en utilisant une imprimante commandée par l'ordinateur ; et
(d) à assembler l'étiquette avec les informations fixes et variables sur celle-ci pour former un ensemble pour décalcomanie comprenant l'étiquette, une feuille support sur laquelle l'étiquette est positionnée, une bande adhésive recouvrant l'étiquette et au moins une portion de la feuille support entourant l'étiquette, et une couverture à décoller positionnée par-dessus la bande adhésive et l'étiquette.

23. Le procédé de la revendication 22, comprenant de plus l'étape consistant à faire adhérer une feuille laminée sur la face de l'étiquette sur laquelle les informations fixes et variables sont imprimées, entre lesdites étapes (c) et (d).

24. L'ensemble pour décalcomanie de la revendication 1, dans lequel ladite étiquette comprend une bandelette ayant une paire de bords latéraux opposés et une ligne de pliage intermédiaire entre lesdits bords latéraux qui divise ladite étiquette en des première et deuxième portions, ladite bandelette étant pliée au niveau de ladite ligne de pliage et ladite première portion faisant face à ladite bande adhésive et ladite deuxième portion faisant face à ladite feuille support.

25. L'ensemble pour décalcomanie de la revendication 24, dans lequel ladite étiquette comprend de plus une feuille rétroréfléchissante qui adhère à ladite première portion et fait face à ladite bande adhésive.

26. L'ensemble pour décalcomanie de la revendication 25, dans lequel ladite feuille rétroréfléchissante est substantiellement de même étendue que ladite première portion.

27. L'ensemble pour décalcomanie de la revendication 25, dans lequel ladite bandelette est une bandelette imprimable par transfert thermique.

28. L'ensemble pour décalcomanie de la revendication 27, dans lequel ladite bandelette est réalisée en un matériau qui est résistant à la chaleur et à l'eau.

29. L'ensemble pour décalcomanie de la revendication 27, dans lequel ladite bandelette est réalisée en un matériau choisi dans le groupe consistant en un polymère et un polypropylène polyester.

30. L'ensemble pour décalcomanie de la revendication 25, dans lequel ladite ligne de pliage est perforée pour définir une ligne de séparation entre lesdites première et deuxième portions.

31. L'ensemble pour décalcomanie de la revendication 25, dans lequel ladite feuille rétroréfléchissante est imprimée pour être utilisée comme une décalcomanie et ladite deuxième portion est imprimée pour être utilisée comme un reçu accompagnant ladite décalcomanie.
